# EUROPEAN PATENT APPLICATION

(11) **EP 0 987 283 A1**
(43) Date of publication of application: **22.03.2000**
(21) Application number: 98203137.9
(22) Date of filing: 18.09.1998
(51) Int. Cl.: C08F 297/02, C08F 8/00, C08F 8/12, C08L 53/00, C09D 153/00

(54) **Block polymer and powder-paint binder composition**

(71) Applicant: DSM N.V., 6411 TE Heerlen (NL)
(72) Inventor: Udding-Louwrier, Saskia, 8016 AB Zwolle (NL); Rietberg, Johan, 8042 NR Zwolle (NL)

(57) **Abstract**

The invention relates to an A-B-C block polymer formulated from an ethylenically unsaturated monomer, said A block and said C block being terminally disposed and said B block being interposed between said A block and said C block; said A block and said C block having functional groups, said B block being essentially free of reactive functional groups and wherein at least one of the A block and the C block is modified into a functional group with a different chemical reactivity with respect to the A-B-C blockpolymer.

## Description

The invention relates to a block polymer and relates also to a powder-paint binder composition comprising a polymer based on an ethylenically unsaturated monomer and optionally a crosslinker.

Polymers based on ethylenically unsaturated monomers, such as for example polyacrylates, can be obtained through radical polymerization, in which functional groups are randomly distributed across the polymer. Such polymers are described in Paint and Surface Coatings (R. Lambourne, pp. 68-74, 1987, Ellis Horwood Limited), the complete disclosure of which is incorporated herein by reference. Powder coatings obtained after curing of a powder paint composition containing a binder composition which includes a polyacrylate and a crosslinker are known to be too brittle and too sensitive to damage upon exposure to solvents.

It is the object of the present invention to provide a curable powder paint binder composition comprising an ethylenically unsaturated monomer based polymer, which results in powder coatings which exhibit good mechanical properties and a superior resistance to chemicals.

The invention is characterized in that the powder paint binder composition comprises a A-B-C block polymer formulated from an ethylenically unsaturated monomer, said A block and said C block being terminally disposed and said B block being interposed between said A block and said C block; said A block and said C block having functional groups, said B block being essentially free of reactive functional groups and wherein at least one of the functional groups of the A block and the C block is modified into a functional group with a different chemical reactivity.

The present invention also relates to the A-B-C blockpolymer.

The present invention gives the possibility, by selecting a specific reagent or a type of reagent, to obtain a polymer which has, with respect to the starting A-B-C polymer, at least one other desired functional group having a different chemical reactivity than the starting functional group. Consequently a broad range of polymers and a broad range of crosslinkers can be combined to obtain powder paint formulations with desired properties.

The use of the A-B-C polymer according to the invention is not limited to powder paint application because the polymer can be applied in many other technical fields of application such as for example solvent- or waterbased coating compositions.

In Table I a survey of examples of possible modifications is given:

**Table I**

| **Functional group in A and/or C block of A-B-C block polymer** | **Reagent or type of reagent** | Resulting functional group in modified A-B-C block polymer |
|---|---|---|
| hydroxyl | anhydride, diacid | carboxylic acid |
| | alkylacetoacetate | acetoacetate |
| | NCO functional alkoxy silane | alkoxy silane |
| | polyisocyanate and hydroxyvinyl ether or aminovinyl ether | vinyl ether |
| | polyisocyanate and allylalcohol or propenol | allyl or propenyl |
| | polyisocyanate and hydroxy (meth)acrylate | (meth)acrylate |
| | itaconic anhydride or itaconic acid | itaconate |
| | maleic anhydride, maleic acid of fumaric acid | maleate or fumarate |
| | alkoxy methyl(meth)acrylamide | acrylamide |
| | (meth)acrylic acid, | (meth)acrylate |
| | (meth)acrylic acidalkylester, | |
| | (meth)acrylic anhydride | |
| carboxylic acid | ethylene oxide, propylene oxide, ethylene carbonate, propylene carbonate | hydroxy |
| | epoxy functional alkoxy silane | alkoxy silane |
| | hydroxy amine | oxazoline |
| | amine | amide |
| | glycidyl(meth)acrylate | (meth)acrylate |
| epoxy | CO₂ | carbonate |
| | (meth)acrylic acid | (meth)acrylate |

Regarding Table I, the modification of the starting A-B-C block polymer can, for example, take place by reaction of this A-B-C block polymer and a compound comprising an ethylenically unsaturated group, an acid group, an hydroxy group, an isocyanate group, an acetoacetate group, an epoxide group, a vinylether group or a fatty acid group.

Said modification with an ethylenically unsaturated groups will result in a polymer having, for example, (meth)acrylate, vinylether, fumaric or maleic end groups. The selection of the ethylenically unsaturated groups depends on the functionality in blocks A and C.

Furthermore, the present invention can result, for example, in that a polymer having carboxyl groups in A or C may be modified with glycidyl (meth)acrylate, a polymer having epoxy groups in A or C may be modified with (meth)acrylic acid and a polymer having hydroxyl groups in A or C may be modified with a polyisocyanate and a hydroxyvinylether or hydroxy (meth)acrylate or allylalcohol.

A polymer containing hydroxylgroups may also be modified with an unsaturated carboxylic acid such as for example fumaric acid or maleic acid anhydride and may also be functionalised with a saturated anhydride to an acid.

At the end blocks A and C of the A-B-C polymer functional groups are located. Examples of suitable functional groups are carboxyl groups, epoxy groups, anhydride groups, hydroxyl groups, acetoacetonate groups and combinations thereof.

The combined weight percent of the end blocks A and C is generally less than 30 wt.% of the total weight of the A-B-C- block copolymer.

The A-B-C polymer can be obtained through controlled radical polymerization in the presence of an initiator and a metal complex or a metal-containing compound after which the modification takes place in a second step.

The block B contains essentially no reactive or crosslinkable functional groups. Block B may however include various monomer units such as, for example, alkyl(meth)acrylates and styrene.

Examples of suitable functional monomers in blocks A and C include (meth)acrylic acid, (meth)acrylic acid esters, glycidyl (meth)acrylate and hydroxyethyl (meth)acrylate. The functional monomers in A and C may be the same or different. Preferably, the monomers in blocks A and C are epoxy, carboxyl and hydroxyl groups.

Suitable ethylenically unsaturated monomers include, for example, styrene, acrylonitrile and ethylenically unsaturated mono- or dicarboxylic acid derivatives. These derivatives include preferably esters, of (C₃-C₆) monoethylenically unsaturated monocarboxylic acids, such as for example (meth)acrylic acid and crotonic acid, and (C₄-C₆) monoethylenically unsaturated dicarboxylic acids such as, for example, maleic acid, maleic anhydride, itaconic acid and fumaric acid.

(Meth)acrylic acid ester is preferred.

Suitable (meth)acrylic acid derivatives include, for example, (meth)acrylic acid, methyl (meth)acrylate, ethyl (meth)acrylate, butyl (meth)acrylate, propyl (meth)acrylate, 2-ethylhexyl (meth)acrylate, cyclohexyl (meth)acrylate, decyl (meth)acrylate, isodecyl (meth)acrylate, benzyl (meth)acrylate and hydroxyalkyl (meth)acrylates such as hydroxyethyl and hydroxypropyl (meth)acrylate and/or glycidyl esters or glycidyl ethers of alkyl (meth)acrylates.

The degree of branching of the starting A-B-C polymer is generally between 2 and 6. Branching refers to the extensions of the polymer chain(s) attached to the polymer backbone.

The polymerization of the starting A-B-C polymer generally takes place at temperatures between 60°C and 180°C and preferably between 80°C and 170°C. The pressure is generally between 1 and 10 atmospheres. The polymerization is carried out under an inert atmosphere.

Suitable examples of initiators used in producing the A-B-C block polymer include halogen containing compounds, for example, α-halo-substituted carboxylic (C₁-C₆)alkyl esters.

Suitable halogen atoms e.g. halo-subsituents are for example chloro and bromo. Examples of such initiators are α-(mono-, di-, or tri-)chloro or bromo acetic methyl ester, α-(mono- or di-)chloro- or bromo propionic methyl ester, α-chloro or bromo butyric methyl ester and α-chloro or bromo malonic dimethyl ester.

The initiators may also be multi-functional, such as, for example, 4-vinyl benzyl chloride, α,α'-dibromo-p-xylene, α,α-dichloro-p-xylene, 2,4-mesitylene disulphonyl chloride, 1,3,5-tris(bromomethyl)benzene, tetrakis (bromomethyl) benzene, hexakis (bromomethyl)-benzene, 1,4-dibromo-2-butene, and esters of the aforementioned α-halogen-substituted carboxylic acids with diols and polyols such as, for example, the tri(dichloroacetic acid) ester of trimethylol propane.

Preferably dichloromethylacetate is used as the initiator.

The metals may be present in a compound with a covalent or ionic bond or in a complex with a coordination bond.

The metal containing compound or the metal complex may act as a catalyst.

Suitable metallic elements are Cu, Fe, Ag, Ti, W, U, Al, Mo, Pd, Ru, Rh and Ni.

Preferably Cu, Fe, Ru and Ni are used.

Preferably, the catalyst is a metal complex based on one or more metal ions or salts with exchangeable counterions and ligands.

The number of counterions lies between 0 and 6 and preferably between 1 and 4. In the case of tetravalent metals it is possible to use, for example, four monovalent counterions, two divalent counterions or a combination of a trivalent and a monovalent counterion. Preferably four monovalent counterions are used.

In the case of trivalent metals the number of counterions is between 1 and 3. Preferably three monovalent counterions are used.

Examples of suitable counterions include halides, preferably chloride and bromide, (C₁-C₂₀) alkoxides, preferably (C₁-C₈) alkoxide, (C₂-C₂₀) carboxylates, preferably (C₂-C₈) carboxylates, enolates, preferably of 2,4-pentanedione (acetylacetonates) and alkyl esters of malonic acid and acetyl acetic acid, phenolates, naphthenates, cresylates and mixtures of said counterions.

Suitable ligands include, for example, (substituted) bipyridines, pyridines, bi- and tridentate amines, mono-, bi- and tridentate phosphines, imines and nitriles.

Examples of suitable bipyridines include 2,2'-bipyridine and 4,4'-dialkyl-2,2'-bipyridine.

Examples of amines are tetramethylethylene diamine (TMEDA), tetramethylpropylene diamine and pentamethylene diethylene triamine.

Suitable phosphines include for example triphenylphosphine, 1,2-bis(diphenylphosphino)ethane, 1,3-bis(diphenylphosphino)propane, 1,4-bis(diphenylphosphino) butane, R(+)-2,2'-bis(diphenylphosphino) 1,1-binaphthyl, S(-)2,2'-bis(diphenylphosphino) 1,1-binaphthyl, PPh₃ and 1,2-bis(dimethylphosphino) ethene.

Suitable nitriles include for example acetonitrile and succinonitrile.

Suitable pyridines include for example pyridine, alkylpyridine, 2,2'-bipyridine, 4,4'dialkyl-2,2'-bipyridine, 2-pyridyl acetonitrile and 2,2':6',2'-terpyridine.

Suitable imines can be obtained by the reaction of salicylaldehyde with a compound containing nitrogen atoms. Preferably, the nitrogen compound is a polyamine such as, for example, ethylenediamine, cis-1,2-cyclohexanediamine, trans-1,2-cyclohexanediamine (racemic), [S,S]-trans-1,2-cyclohexanediamine, [R,R]-trans-1,2-cyclohexanediamine, N-methylbisethylenetriamine, triethylenetetraamine, 3,3'-diamino-N-methyldipropylamine, 1,2-phenylenediamine, 1,1,2,2,-tetramethylethylenediamine and propylene imine dendrimers.

It is also possible to use, for example, substituted o-hydroxybenzaldehydes instead of salicylaldehyde.

Suitable substituents include for example alkyl, aryl, halogen, nitrile, nitroxyl, dialkylphosphino, diarylphosphino, pyridyl, aminoalkyl, aminoaryl, carboxyl, hydroxyl and carbonyl groups.

Optionally a small amount, for example between 0.001 and 2 mol.%, of metal salts can be added during the production of the A-B-C-block polymer. Examples of such salts include CuCl₂, CuBr₂ or FeCl₃.

The catalysts can also be applied to a carrier such as, for example, silica.

The controlled living radical polymerization of the starting A-B-C block may take place by bulk polymerization or by solvent polymerization in the presence of solvents such as, for example, toluene, acetonitrile, xylene, 1,2-dichloroethane, tert-butyl benzene, methyl ethyl ketone, dimethyl formamide, dimethyl sulphoxide, mesitylene, butyl acetate and benzene.

Controlled living radical polymerizations are described in J. Am. Chem. Soc. 1997, 119, 674-680, and in Macromolecules, 1995, 28, 7901-7910, the complete reference of which is incorporated herein by means of reference.

The producing of the A-B-C block polymer comprises adding the functionalized monomer to a mixture, consisting of the catalyst and the initiator, in a solvent. Suitable solvents include, for example, toluene, butyl acetate and methyl isobutyl ketone.

The amount of initiator used is between about 0.01 and about 10 mol.% relative to the monomers. The amount of catalyst used is between about 0.001 and about 10 mol.% relative to the monomers.

After the percentage of conversion of the functionalized monomer in block A has passed, for example, 90%, non-functionalized monomer B can be added.

After the percentage of conversion of the total amount of monomers A + B has passed for example, 85% funtionalized monomer C can be added.

In a preferred embodiment block A is formed by an initiator with functional groups such as, for example, 2-bromo-2-methyl-hydroxy ethylpropionate or and 2-bromo-hydroxy ethylpropionate.

Block C can also be formed by addition of a functional alkene compound. Suitable alkene compounds include allylalcohol, methylbutenol and allylglycidylether.

On completion of the polymerization metal salts and/or ligands can be removed via filtration over silica or washing with water.

The method of producing the A-B-C block polymer according to the invention can comprise the steps of:
a) providing a mixture, said mixture comprising an effective amount of an initiator and an effective amount of a catalyst;
b) adding a first functionalized monomer to said mixture, said first functionalized monomer comprising for example an ethylenically unsaturated mono- or dicarboxylic acid derivative;
c) polymerizing said first functionalized monomer at a suitable temperature and pressure to effectively polymerize said first functionalized monomer to form A block of said A-B-C block polymer;
d) adding a non-functionalized monomer to said mixture, said non-functionalized monomer having essentially no reactive functional groups which are crosslinkable to said first functionalized monomer, and polymerising said non-functionalized monomer to form B block of said A-B-C block polymer;
e) adding a functionalised alkene compound to said mixture or adding a second functionalized monomer to said mixture, said second functionalized monomer having functional groups which are not crosslinkable to said non-functionalized monomer, and polymerizing said second functionalized monomer to obtain C block of said A-B-C block polymer, thereby obtaining said A-B-C block polymer, wherein said A block and said C block of said A-B-C block polymer are terminally disposed and said B block is interposed between said A block and said C block, said B block being essentially free of reactive functional groups which are crosslinkable with those on said A block and said C block and
f) functionalising the A-B-C blockpolymer.

The method of producing the modified A-B-C block polymer according to the invention can for example also comprise the steps of:
a) providing a mixture, comprising a functionalized initiator, a catalyst and a non-functionalized monomer, said non-functionalized monomer having essentially no reactive functional groups which are crosslinkable to said functionalized initiator, and polymerizing said non-functionalized monomer to form the A and B blocks of said A-B-C block polymer;
b) adding a functional alkene compound to said initiator or adding a functionalized monomer to said mixture, said functionalized monomer having functional groups which are not crosslinkable to said non-functionalized monomer, and polymerizing said functionalized monomer to obtain C block of said A-B-C block polymer, thereby obtaining said A-B-C block polymer, wherein said A block and said C block of said A-B-C block polymer are terminally disposed and said B block is interposed between said A block and said C block, said B block being essentially free of reactive functional groups which are crosslinkable with those on said A block and said C block and
c) functionalising the A-B-C blockpolymer.

As shown in Table I the A-B-C blockpolymer can be functionalised with different components. The reaction conditions and the reagents depend on the selection of the reaction components and the intended application.

The molecular weight (Mn) of a modified polymer is usually higher than 400 and is preferably higher than 600. To obtain good flow behaviour at temperatures between 100°C and 200°C, the molecular weight (Mn) is usually lower than about 10,000 and preferably lower than about 7000.

The Tg of a modified A-B-C polymer, for example a polyacrylate, is generally between about 30°C and about 120°C. To obtain an optimum storage stability, the Tg is preferably higher than 50°C. With a view to the processing of the polymer the Tg is preferably lower than 100°C.

The modified polymer according to the invention can be applied in powder paint composition as a polymer, as a crosslinker and as the binder system. In case the polymer acts as a crosslinker a suitable polymer has to be selected, in case the polymer acts as the polymer a suitable crosslinker has to be selected and in case the polymer acts as the binder system there is no need for a further polymer or crosslinker. The preparation of powderpaints is described in general terms in, for example, Misev, Powder Coatings, Chemistry and Technology, the complete disclosure of which is incorporated herein by reference.

Preferably a carboxylic acid functional polymer, obtained by modification of an hydroxy functional A-B-C block polymer with an anhydride or diacid, may be crosslinked with, for example, triglycidyl isocyanurate (TGIC), polybisphenol-A epoxides, compounds containing (blocked) isocyanate groups, compounds containing β-hydroxyalkylamide groups, amino resins, crosslinkers containing acid groups and crosslinkers (as described in EP-A-600546) comprising at least one aliphatic branched or linear chain with an epoxy functinality containing 5-26 carbon atoms such as, for example, epoxidized oils.

This binder composition yields a good coating after thermal curing under the influence of a latent catalyst such as, for instance, a peroxide at a temperature ranging from, for instance, about 80°C to about 200°C, depending on the selected polymer.

The powder paint binder composition according to the invention can also be applied in a radiation curable powder paint composition if the modification with, for example, an ethylenically unsaturated group takes place.

A radiation-curable system can comprise a resin, a crosslinker, a photoinitiator, a flow agent and pigments.

Suitable polymers or crosslinkers for use in radiation curable powder paint compositions include for example (meth)acrylated polyesters, (meth)acrylated polyurethanes, (meth)acrylated polyethers, polyepoxides, polyvinylethers, polyallylethers, unsaturated polyesters and poly(meth)acrylates. In this application also a crosslinker comprising units of a prepolymer having a molecular weight (Mn) higher than 400 and units of a vinyl ether or an unsaturated alcohol, the number of polymerizable unsaturations of the crosslinker being higher than or equal to 2, is very suitable. It is also possible to apply combinations of several polymers and/or crosslinkers.

Radiation curing of the binder composition according to the invention preferably takes place through UV and EB curing. These methods are described in more detail in, for instance, the article "UV and EB-curing" by S.J. Bett et al. in JOCCA 1990 (11), pp. 446-453.

The composition according to the invention can be cured by, for example, radical polymerization and by cationic UV polymerization.

For the UV radiation curing of a powder paint formulation a photoinitiator can, at a temperature ranging from, for instance, 40°C to 120°C, be mixed with a binder composition according to the invention. A polymer in which the functional, for example, hydroxyl-group is modified into a vinyl ether, allyl or propenyl, (meth)acrylate, itaconate, maleate or fumarate is preferred for this application. An important advantage due to the present invention is the high cure speed, and the possibility of a low temperature curing for example at temperatures lower than 140°C.

Mixing can take place both in a solvent and in the melt, for instance in an extruder or in a static mixer. Further, pigments and the desired auxiliary materials such as, for instance, flow agents can be added. The paint can subsequently be applied to the substrate or be sprayed electrostatically. After application, the powder paint is molten at temperatures ranging from, for instance, 40°C to 170°C by being placed in an oven, exposure to infra-red radiation, or a combination of both, so that a closed, smooth coating film is formed with a layer thickness ranging from, for instance, 20 to 200 µm, after which the still warm panel is cured under a UV light source. Afterwards post-heating may take place.

Examples of suitable photoinitiators are described in Volume 3 "Photoinitiators for free radical and cationic polymerisation" of "Chemistry and Technology of UV and EB formulations" by K. Dietliker (1991; SITA Technology Ltd., London).

Photoinitiators initiate curing of the compositions according to the invention upon exposure to light. Suitable initiators for radical polymerizations are ketonic and may be aromatic such as, for instance, benzophenone. Irgacure 184® (Ciba) is an aryl ketone with hydroxycyclohexyl-phenyl-ketone as active component and is, like Irgacure 369® (active component 2-benzyl-2-dimethylamino-1-(4-morpholinophenyl)-butanone-1), a suitable photoinitiator. Acyl phosphine, such as 2,4,6-trimethyl benzoyl diphenyl phosphine oxide (Lucerine TPO®, BASF) can also be used. Chemical derivatives of this photoinitiator are also suitable, as are combinations of these initiators. A suitable combination of photoinitiators is formed by Irgacure 1800® (Ciba), which consists of 75 wt.% Irgacure 184® and 25 wt.% (bis (2,6-dimethoxy benzoyl)-2,4,4-trimethylpentyl phosphine oxide).

The powder paint compositions according to the present invention are suitable for application on substrates such as for example metal, plastics, wood, paper, cardboard and glass. The compositions are very suitable to be applied in the automotive industry.

Examples of customary additives in the paint formulations are pigments, emulsifiers, preservatives, light stabilizers, UV absorption agents, flow agents, degassing agents, fillers, stabilizers and/or catalysts. After curing a powder coating having a good resistance to yellowing and to weather influences, and exhibiting good flow behaviour, good storage stability, good resistance to chemicals, a high gloss, high scratch resistance and good mechanical properties is obtained.

## Claims

1. A-B-C block polymer formulated from an ethylenically unsaturated monomer, said A block and said C block being terminally disposed and said B block being interposed between said A block and said C block; said A block and said C block having functional groups, said B block being essentially free of reactive functional groups and at least one of the A block and the C block is modified into a functional group with a different chemical reactivity (with regard to the starting A-B-C polymer).

2. Polymer according to Claim 1 characterized in that the functional group in the starting A block and/or C block is a hydroxyl group, a carboxylic acid group or an epoxy group and the resulting functional group in the modified A-B-C blockpolymer is a carboxylic acid, an acetoacetate, an alkoxysilane, a vinylether, an allyl or propenyl group, a (meth)acrylate, an itaconate, a maleate or fumarate, a hydroxyl, an oxazoline, an amide or a carbonate group.

3. A method of producing the A-B-C block polymer according to any one of Claims 1-2 comprising the steps of:
a) providing a mixture, said mixture comprising an effective amount of an initiator and an effective amount of a catalyst;
b) adding a first functionalized monomer to said mixture, said first functionalized monomer comprising for example an ethylenically unsaturated mono- or dicarboxylic acid derivative;
c) polymerizing said first functionalized monomer at a suitable temperature and pressure to effectively polymerize said first functionalized monomer to form A block of said A-B-C block polymer;
d) adding a non-functionalized monomer to said mixture, said non-functionalized monomer having essentially no reactive functional groups which are crosslinkable to said first functionalized monomer, and polymerising said non-functionalized monomer to form B block of said A-B-C block polymer;
e) adding a functionalised alkene compound to said mixture or adding a second functionalized monomer to said mixture, said second functionalized monomer having functional groups which are not crosslinkable to said non-functionalized monomer, and polymerizing said second functionalized monomer to obtain C block of said A-B-C block polymer, thereby obtaining said A-B-C block polymer, wherein said A block and said C block of said A-B-C block polymer are terminally disposed and said B block is interposed between said A block and said C block, said B block being essentially free of reactive functional groups which are crosslinkable with those on said A block and said C block and
f) functionalising the A-B-C blockpolymer.

4. A method of producing the A-B-C block polymer according to any one of Claims 1-2 comprising the steps of:
a) providing a mixture, comprising a functionalized initiator, a catalyst and a non-functionalized monomer, said non-functionalized monomer having essentially no reactive functional groups which are crosslinkable to said functionalized initiator, and polymeriziging said non-functionalized monomer to form the A and B blocks of said A-B-C block polymer;
b) adding a functional alkene compound to said initiator or adding a functionalized monomer to said mixture, said functionalized monomer having functional groups which are not crosslinkable to said non-functionalized monomer, and polymerizing said functionalized monomer to obtain C block of said A-B-C block polymer, thereby obtaining said A-B-C block polymer, wherein said A block and said C block of said A-B-C block polymer are terminally disposed and said B block is interposed between said A block and said C block, said B block being essentially free of reactive functional groups which are crosslinkable with those on said A block and said C block and
c) functionalising the A-B-C blockpolymer.

5. Binder composition comprising a polymer according to any one of Claims 1-2 or a polymer obtained according to any one of Claims 3-4.

6. Powder paint binder composition comprising a polymer according to any one of Claims 1-2 or a polymer obtained according to any one of Claims 3-4.

7. Radiation curable powder paint binder composition comprising a polymer according to any one of Claims 1-2 in which the functional group in the A and/or C group is modified into a vinyl ether, allyl, propenyl, (meth)acrylate, itaconate, maleate or fumarate group.

8. Thermal curable powder paint binder compositon comprising a polymer according to any one of Claims 1-2 in which the functional group in the A and/or C block is modified into a carboxylic acid group.

9. Powder paint comprising a composition according to any one of Claims 6-8 and optionally pigment, catalyst, fillers and additives.

10. Powder coating based on a powder paint according to Claim 9.

11. Entirely or partly coated substrate, characterized in that a powder coating according to Claim 10 has been used as the coating.
